# EUROPEAN PATENT APPLICATION

(11) **EP 1 883 245 A1**
(43) Date of publication of application: **30.01.2008**
(21) Application number: 06746396.8
(22) Date of filing: 15.05.2006
(51) Int. Cl.: H04N 7/32

(54) **RATE CONVERTER**

(30) Priority: 16.05.2005 JP 2005142264
(71) Applicant: Pioneer Corporation, Tokyo 153-8654 (JP)
(72) Inventor: TADA, Kenichiro, c/o PIONEER CORPORATION, Tokorozawa-shi, Saitama 3598522 (JP)
(74) Representative: Viering, Jentschura & Partner
(86) International application number: PCT/JP2006/309649
(87) International publication number: WO 2006/123606

(57) **Abstract**

A rate converter includes: picture configuration judgment means for identifying a picture configuration containing at least a picture type for a plurality of pictures classified into one of the preset picture types contained in a unit data group of inputted video data; and rate conversion means for selectively rate-converting the bit rate of the picture with a predetermined rate conversion ratio. Furthermore, the rate converter includes picture selection means for selecting a picture to be rate-converted by the rate conversion means among a plurality of pictures according to at lest the picture type in the picture configuration identified by the picture configuration judgment means.

## Description

### Technical Field

The present invention relates to a rate converter for rate-converting video data, for example.

### Background Art

The rate conversion or bit-rate conversion of video data or a video data bit stream can increase the availability of a limited recording medium in the case that video contents, which are digital-distributed from a broadcast station, are recorded onto the recording medium, such as a HDD and a DVD, or in similar cases.

A rate converter, which performs such a rate conversion of the video data, is required to perform the rate conversion at a desired rate conversion factor. In general, in order to perform the rate conversion at the desired rate conversion factor, the structure of the rate converter becomes complicated because the rate conversion factor of the rate converter is processed in terms of software.

In this regard, a patent document 1 suggests a bit-rate converting apparatus which can perform the rate conversion without any complicated processes.

Patent document 1: Japanese Patent Application Laid Open NO. 2003-264839

### Disclosure of Invention

### Subject to be Solved by the Invention

However, the aforementioned bit-rate converting apparatus in the patent document 1 has such a technical problem that it is necessary to process the rate conversion factor in terms of software in accordance with the desired rate conversion factor, so that the structure cannot be sufficiently simplified.

In order to solve the above-exemplified problem, it is therefore an object of the present invention to provide a rate converter in a relatively simple structure which can rate-convert the video data at a desired rate conversion factor.

### Means for Solving the Object

### (Rate Converter)

The above object of the present invention can be achieved by a rate converter provided with: a picture structure judging device for judging a picture structure including at least a picture type, the picture structure being related to a plurality of pictures, the plurality of pictures being included in a unit data group of inputted video data, each of the plurality of pictures being classified into any one of a plurality of picture types set in advance; a rate converting device for selectively rate-converting a bit rate of the picture at a predetermined rate conversion factor; and a picture selecting device for selecting the picture to be rate-converted by the rate converting device, from among the plurality of pictures, in accordance with at least the picture type of the picture structure judged by the picture structure judging device.

According to the rate converter of the present invention, in its operation, the video data in a format of MPEG (Moving Picture Experts Group) 2 or the like is inputted to the rate converter. Here, the video data in the format of MPEG2 or the like is formed of a plurality of data groups, by using a GOP (Group of Picture) as the unit data group. Each data group includes the plurality of pictures, and each of the plurality of pictures is classified into any one of the three picture types set in advance, which are an I picture (Intra-coded picture), a P picture (Predictive-coded picture), and a B picture (Bidirectionally predictive-coded picture).

The video data inputted in this manner is rate-converted at a desired rate conversion factor, for example, and it is recorded onto a recording medium, such as a HDD and a DVD.

In particular, in the present invention, the picture structure including at least the picture type is judged by the picture structure judging device, wherein the picture structure is related to the plurality of pictures included in the unit data group of the inputted video data. Incidentally, in addition to the picture type, the number of pictures included in the unit data group and a picture size, which are also the picture structure, may be judged. The picture structure judged in this manner is stored into a memory or the like.

Moreover, in accordance with the picture type judged in this manner, the picture to be rate-converted by the rate converting device is selected by the picture selecting device, from among the plurality of pictures included in the unit data group. Only the picture selected in this manner is rate-converted by the rate converting device at the predetermined rate conversion factor, such as 1/2. On the other hand, the not-selected picture is not rate-converted and is outputted as it is. That is, in the present invention, the rate converting device's "selectively rate-converting" means that the rate converting device rate-converts only the picture selected by the picture selecting device and that it does not rate-convert the other pictures.

Both the picture that is selected (i.e. rate-converted) and the picture that is not selected (i.e. not rate-converted) are outputted onto the same memory medium and constitute the unit data group again. Thus, it is possible to obtain the rate-converted video data.

As described above, the rate conversion is performed on the picture selected in accordance with the picture type, only by the rate converting device. Thus, it is possible to rate-convert the video data in a relatively simple structure. Such a structure is relatively inexpensive, so that it is extremely useful in practice.

In one aspect of the rate converter of the present invention, the picture selecting device selects the picture to be rate-converted, in accordance with a desired rate conversion factor, which is related to the video data to be outputted with respect to the inputted video data, in addition to the picture type.

According to this aspect, the picture to be rate-converted is selected by the picture selecting device in accordance with the desired rate conversion factor. The "desired rate conversion factor" herein means a rate conversion factor in which a series of video data related to a rate conversion target is averaged in terms of time. The rate conversion factor of the individual picture changes every second; for example, it is 1 once and it is 1/2 another time.

Such selection is performed on the picture to be rate-converted, from among the plurality of pictures included in the unit data group, in such a manner that the data size of the unit data group after the rate conversion is almost or completely equal to the data size when the picture is rate-converted at the desired rate conversion factor.

Thus, it is possible to output the video data which is rate-converted at the desired rate conversion factor, with respect to the inputted video data. Thus, the rate conversion can be performed at the rate conversion factor specified by a user, for example.

In another aspect of the rate converter of the present invention, it is further provided with a setting device for setting the desired rate conversion factor.

According to this aspect, the desired rate conversion factor is set by the setting device in accordance with an input operation from a user, for example. Incidentally, the setting device may be the setting by an external operation on a remote controller, a front panel, or the like, or it may be the setting by automatic setting within a recorder.

Thus, it is easy to set the desired rate conversion factor. In particular, the specification from a user becomes easy, which is extremely useful.

In another aspect of the rate converter of the present invention, the picture structure judging device judges the picture structure including at least a picture size in addition to the picture type, the picture structure being related to the plurality of pictures, and the picture selecting device selects the picture to be rate-converted, in accordance with the picture size in addition to the picture type.

According to this aspect, the picture to be rate-converted by the rate converting device is selected by the picture selecting device, in accordance with the picture size in addition to the picture type. Thus, it is also possible to select the picture to be rate-converted, by additionally considering the recordable data capacity of a recording medium on which the outputted video data is recorded. For example, if the recordable data capacity is relatively large, the picture type of the picture to be rate-converted may be relatively reduced, and if the recordable data capacity is relatively small, the picture type of the picture to be rate-converted may be relatively increased.

In another aspect of the rate converter of the present invention, it is further provided with a picture structure information memory device for temporarily storing picture structure information which indicates the judged picture structure with regard to at least one unit data group, the picture selecting device selecting the picture to be rate-converted, on the basis of the picture structure information temporarily stored in the picture structure information memory device.

According to this aspect, the picture structure information, which indicates the picture structure judged by the picture structure judging device, is temporarily stored by the picture structure information memory device, which is provided with a memory or the like. At this time, the picture to be rate-converted is selected by the picture selecting device on the basis of the picture structure information temporarily stored in this manner. Thus, the picture to be rate-converted can be selected in at least each one data group. For example, the picture structure, such as the picture type and the picture size, can be prioritized in one data group, and the picture to be rate-converted can be selected in each one data group.

In another aspect of the rate converter of the present invention, the picture selecting device is provided with: a route selector switch which can change a supply route of supplying the inputted video data between a first route for supplying the data to the rate converting device and a second route for bypassing the rate converting device; and a selector controlling device for selectively changing the route selector switch in accordance with at least the picture type.

According to this aspect, the supply route of supplying the inputted video data is changed between the first route for supplying the data to the rate converting device and the second route for bypassing the rate converting device, by that the route selector switch is selectively changed by the selector controlling device. Thus, it is possible to make the selected picture pass through the first route and the not-selected picture pass through the second route, by using the picture selecting device. Thus, the picture to be rate-converted can be surely rate-converted by the rate converting device.

In another aspect of the rate converter of the present invention, the picture selecting device prioritizes and selects the picture whose picture type is a B picture, the picture whose picture type is a P picture, and the picture whose picture type is an I picture, in this order, as the picture to be rate-converted.

According to this aspect, the picture whose picture type is the B picture, the picture whose picture type is the P picture, and the picture whose picture type is the I picture are prioritized in this order and selected by the picture selecting device. For example, firstly, the B picture is selected as the picture to be rate-converted. If the desired rate conversion factor cannot be realized even if all the B pictures are selected, the P picture is selected. Then, further, as long as the desired rate conversion factor cannot be realized even if all the P pictures are selected, the I picture is selected. That is, it is constructed to select the I picture, which significantly influences image quality in case of the rate conversion, as little as possible. Thus, it is possible to reduce the deterioration of the image quality after the rate conversion.

These effects and other advantages of the present invention will become more apparent from the following embodiment.

As explained above, the rate converter is provided with: the picture structure judging device for judging the picture structure; the rate converting device for performing the rate-conversion at the predetermined rate conversion factor; and the picture selecting device for selecting the picture to be rate-converted by the rate converting device, in accordance with at least the picture type of the picture structure. Thus, it is possible to rate-convert the video data in a relatively simple structure, and such a structure is relatively inexpensive, so that it is extremely useful in practice.

### Brief Description of Drawings

[FIG. 1] FIG. 1 is a block diagram showing the basic structure of a rate converter in a first embodiment.
[FIG. 2] FIG. 2 is a conceptual view showing the arrangement of picture structure information in a memory of a picture structure information memory device in the first embodiment.
[FIG. 3] FIG. 3 is a flowchart showing the operation of the rate converter in the first embodiment.
[FIG. 4] FIG. 4 is a flowchart showing the operation of a picture selection process in the first embodiment.
[FIG. 5] FIG. 5 is a flowchart showing the operation of a P picture selection process in the first embodiment.
[FIG. 6] FIG. 6 is a flowchart showing the operation of an I picture selection process in the first embodiment.
[FIG. 7] FIG. 7 is a table showing one example of the picture selection process in the first embodiment.

### Description of Reference Codes

- 100: rate converter
- 110: input device
- 120: picture structure judgment device
- 130: picture structure information memory device
- 140: setting device
- 150: fixed rate converter
- 160: picture selection device
- 162: route selector switch
- 164: selector control device
- 170: recording medium
- 180: control device

### Best Mode for Carrying Out the Invention

Hereinafter, the best mode for carrying out the present invention will be explained in each embodiment in order with reference to the drawings.

### (First Embodiment)

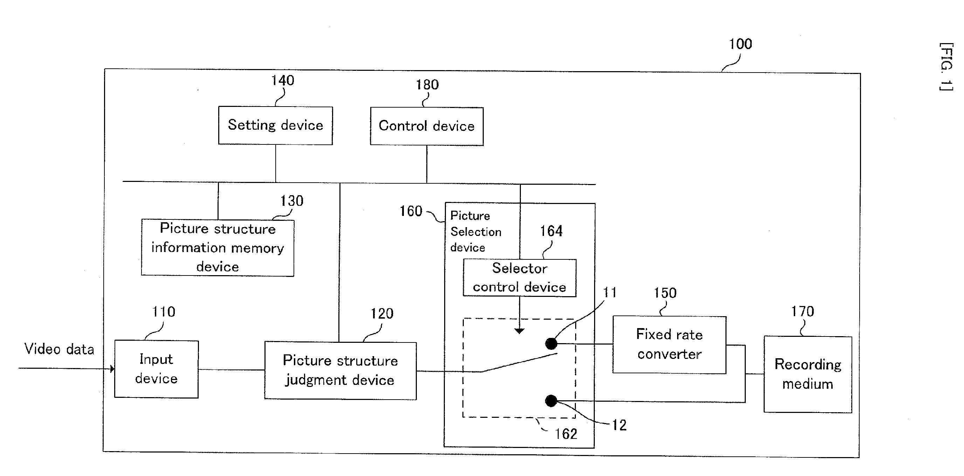

Firstly, with reference to FIG. 1 to FIG. 7, a rate converter in a first embodiment of the present invention will be explained.

### (1-1) Basic structure

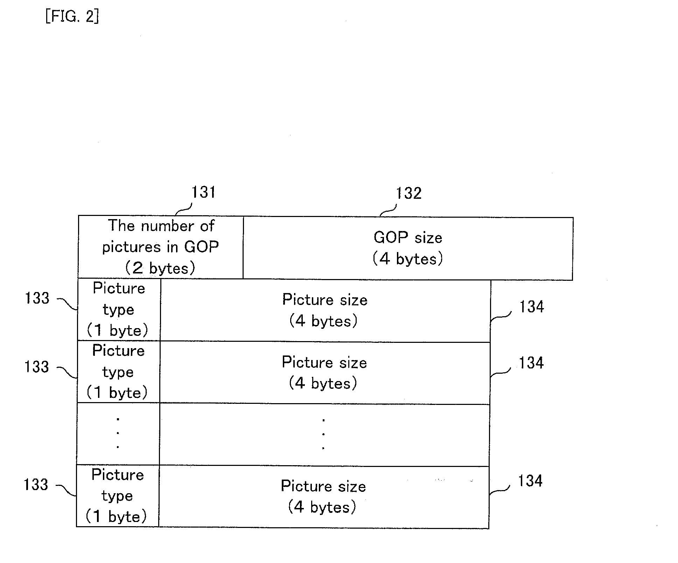

Firstly, with reference to FIG. 1 and FIG. 2, the basic structure of the rate converter in the first embodiment of the present invention will be explained. FIG. 1 is a block diagram showing the basic structure of the rate converter in the first embodiment. FIG. 2 is a conceptual view showing the arrangement of picture structure information in a memory of a picture structure information memory device in the first embodiment.

As shown in FIG. 1, a rate converter 100 in the first embodiment is provided with: an input device 110; a picture structure judgment device 120; a picture structure information memory device 130; a setting device 140; a fixed rate converter 150; a picture selection device 160; a recording medium 170; and a control device 180.

The input device 110 is an interface for inputting video data from the exterior. The video data from the exterior is inputted to the rate converter 100 through the input device 110.

The picture structure judgment device 120 is provided with a memory or the like, and as described later, it judges a picture structure related to a plurality of pictures included in a unit data group of the video data, which is inputted through the input device 110.

The picture structure information memory device 130 is provided with a memory or the like, and it temporarily stores therein picture structure information, which indicates the picture structure judged by the picture structure judgment device 120, in one unit data group.

Specifically, as shown in FIG. 2, in a memory provided for the picture structure information memory device 130, there are arranged: a number-of-pictures in GOP area 131 for storing the number of pictures included in the unit data group, i.e. unit GOP; a GOP size area 132 for storing the size of the unit GOP; and a picture type area 133 and a picture size area 134 for storing the picture type and the picture size of the plurality of pictures included in the unit GOP.

The setting device 140 is an operation panel or the like, and it is possible to set a desired rate conversion factor, described later, by a user through the setting device 140. Incidentally, the setting device 140 may be operated, for example, by audio input, remote control, such as a remote controller. Alternatively, the setting device 140 may be operated by automatic setting within the rate converter 100.

The fixed rate converter 150 is one example of the "rate converting device" of the present invention, and it is a rate converter which can perform the rate conversion at a rate conversion factor fixed to 1/2 (i.e. 50%). Incidentally, it is assumed that the rate conversion process on the individual pictures uses the conventionally existing technologies, and the detailed explanation thereof will be omitted. Moreover, in the first embodiment, the rate conversion factor of the picture unit is set to 1/2 (i.e. 50%); however, the present invention is not limited to this value, and the value of the rate conversion factor can be set, as occasion demands, to 4/5 (i.e. 80%), 3/4 (i.e. 75%), and the like.

The picture selection device 160 includes a route selector switch 162 and a selector control device 164. The picture selection device 160 is provided with a memory or the like, and as described later, it selects the picture to be rate-converted by the fixed rate converter 150, from among the plurality of pictures, in accordance with at least the picture type of the picture structure judged by the picture structure judgment device 120.

The route selector switch 162 can change a supply route of the inputted video data, between a first route 11 for supplying it to the fixed rate converter 150 and a second route 12 for bypassing the fixed rate converter 150.

The selector control device 164 selectively changes the route selector switch 162 in accordance with the picture type.

The recording medium 170 is a hard disk and can record the video data, which is formed of the picture that is rate-converted and the picture that does not need to be rate-converted. Incidentally, the recording medium 170 may be a DVD or the like.

The control device 180 integrally controls the constituent elements of the rate converter 100.

### (1-2) Basic Structure

Next, with reference to FIG. 1, the basic structure of the rate converter in the first embodiment of the present invention will be explained.

In FIG. 1, in the operation of the rate converter 100, firstly, the video data in the MPEG2 format is inputted to the rate converter 100 through the input device 110. The MPEG2-format video data is provided with a plurality of data groups, by using the GOP as the unit data group. Each data group includes the plurality of pictures, and each of the plurality of pictures is classified into any one of the three picture types set in advance; namely, an I picture, a P picture, and a B picture.

The MPEG2-format video data to be inputted may be an elementary stream (ES) which constitutes a transport stream (TS) or a program stream (PS) which complies with the MPEG2. For example, at the time of input, one transport stream is rate-converted in each of the elementary streams included in itself, and at the time of output, the plurality of elementary streams after the rate conversion are grouped again and outputted as the transport stream.

The video data inputted in this manner is rate-converted, as described later, at the desired rate conversion factor set by a user through the setting device 140, and it is recorded onto the recording medium 170.

### (1-3) Details of operation

### (1-3-1) Overall operation

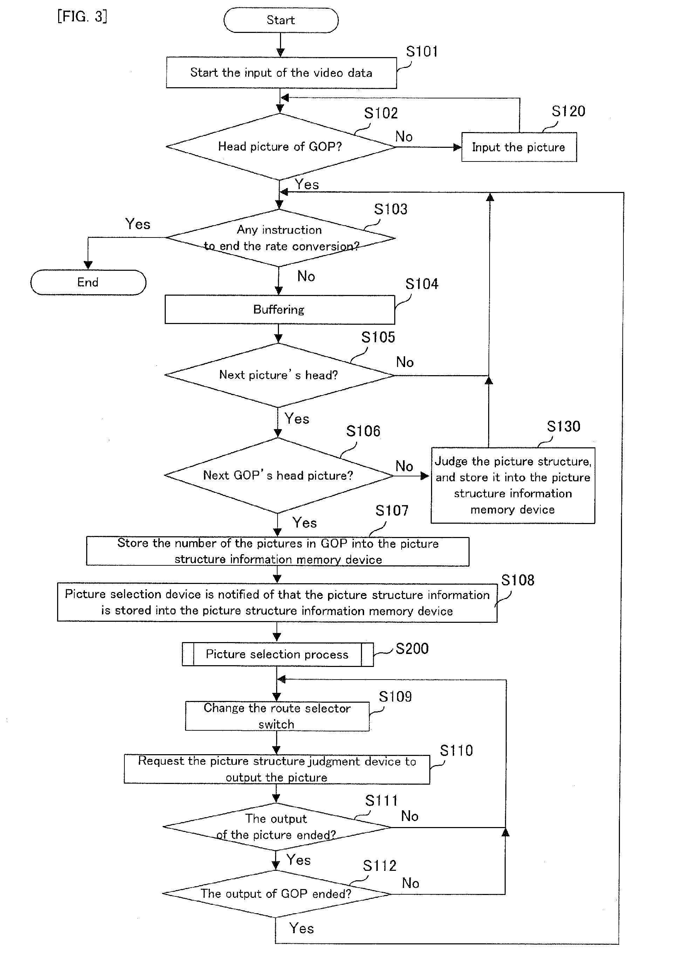

Next, with reference to FIG. 1 to FIG. 3, the operation of the rate converter in the first embodiment of the present invention will be explained in details. FIG. 3 is a flowchart showing the operation of the rate converter in the first embodiment.

As shown in FIG. 3, firstly, the MPEG2-format video data is inputted to the rate converter 100 through the input device 100 (step S101). At this time, if the video data is the transport stream, the video data is inputted in each of the elementary streams included in one transport stream.

Then, the inputted video data is judged by the picture structure judgment device 120 in order of the inputted picture, regarding whether to be the head picture of the GOP (step S102). If the inputted picture is not the head picture of the GOP (the step S102: No), the picture is inputted to the picture structure judgment device 120 as it is (step S120). Such judgment is repeated until the head picture of the GOP is found. That is, the picture is inputted to the picture structure judgment device 120 in each GOP, and the subsequent process is performed.

If the inputted picture is the head picture of the GOP (the step S102: Yes), it is judged whether there is an instruction to end the rate conversion (step S103). If there is an instruction to end the rate conversion (the step S103: Yes), the operation of the rate converter 100 is ended. If there is no instruction to end the rate conversion (the step S103: No), the inputted picture, i.e. the unit GOP of picture, is temporarily stored, i.e. buffered, by the picture structure judgment device 120 (step S104).

Then, with regard to the buffered video data, i.e. the unit GOP, the picture structure is judged by the picture structure judgment device 120 in each picture. That is, it is judged by the picture structure judgment device 120 whether to be a next picture's head, from the head of the buffered video data, in order (step S105). If it is not the next picture's head (the step S105: No), it is judged whether there is an instruction to end the rate conversion (the step S103), and the aforementioned operation is repeated. If it is the next picture's head (the step S105: Yes), it is judged by the picture structure judgment device 120 whether the picture is a next GOP's head picture (step S106). If the picture is not the next GOP's head picture (the step S106: No), the picture type and the picture size of the picture, i.e. the picture structure, are judged by the picture structure judgment device 120. Moreover, the judged picture structure is stored by the picture structure information memory device 130, as the picture structure information (step S130). After that, it is judged again whether there is an instruction to end the rate conversion (the step S103), and the aforementioned operation is repeated.

As described above, particularly in the first embodiment, the picture structure is judged in each picture by the picture structure judgment device 120, and it is stored into the picture structure information memory device 130, as the picture structure information. The storage is repeated with regard to the plurality of pictures included in the unit GOP.

Then, the number N of pictures in the GOP is stored into the picture structure information memory device 130 by the picture structure judgment device 120 (step S107). At this time, a GOP size B, which indicates the size of the GOP, is also stored into the picture structure information memory device 130.

Then, the picture selection device 160 is notified by the picture structure judgment device 120 of the fact that the picture structure information is stored into the picture structure information memory device 130 (step S108).

Then, a picture selection process is performed by the picture selection device (step S200). In the picture selection process, as described later, the picture to be rate-converted is selected from among the plurality of pictures included in the GOP, by the fixed rate converter 150.

Then, the route selector switch 162 is selectively changed by the selector control device 164 (step S109). That is, the route selector switch 162 is selectively changed between the first route 11 for supplying the data to the fixed rate converter 150 and the second route 12 for bypassing the fixed rate converter 150. Specifically, the route selector switch 162 is changed to make the selected picture pass through the first route 11 and to make the not-selected picture pass through the second route 12, by the picture selection device 160. Thus, the picture to be rate-converted is surely rate-converted by the fixed rate converter 150, and it is stored into the recording medium 170.

Then, a request to output the corresponding picture, i.e. the picture that is to pass through the route selector switch 162 after the change, is given to the picture structure judgment device 120 from the picture selection device 160 (step S110).

Then, it is judged by the picture structure judgment device 120 whether the output of the picture is ended (step S111). If the output of the picture is not ended (the step S111: No), the route switch is changed again (the step S109), and the output request is given again to the picture structure judgment device 120 (the step S110), in order to continue the output of the picture.

If the output of the picture is ended (the step S111: Yes), it is judged by the picture structure judgment device 120 whether the output of the GOP is ended (step S112). If the output of the GOP is ended (the step S112: Yes), it is judged again whether there is an instruction to end the rate conversion (the step S103). If there is no instruction to end the rate conversion (the step S103: No), the same operation as the aforementioned operation is performed on the next GOP.

The picture outputted in each GOP by the picture structure judgment device 120 in this manner is transmitted through the first route 11 or the second route 12, and it is recorded onto the recording medium 170. That is, both the picture that is selected (i.e. rate-converted) by the picture selection device 160 and the picture that is not selected (i.e. not rate-converted) are outputted to the same recording medium 170, to constitute the unit GOP again. Thus, it is possible to obtain the rate-converted video data.

As described above, the selected picture is rate-converted only by the fixed rate converter 150, so that it is possible to rate-convert the video data in a relatively simple structure. Such a structure is relatively inexpensive, so that it is extremely useful in practice.

### (1-3-1) Picture selection process

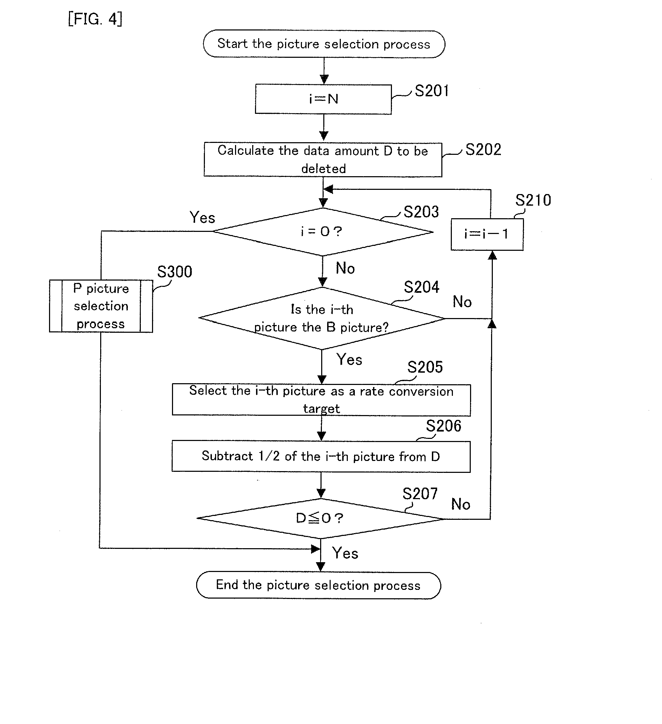

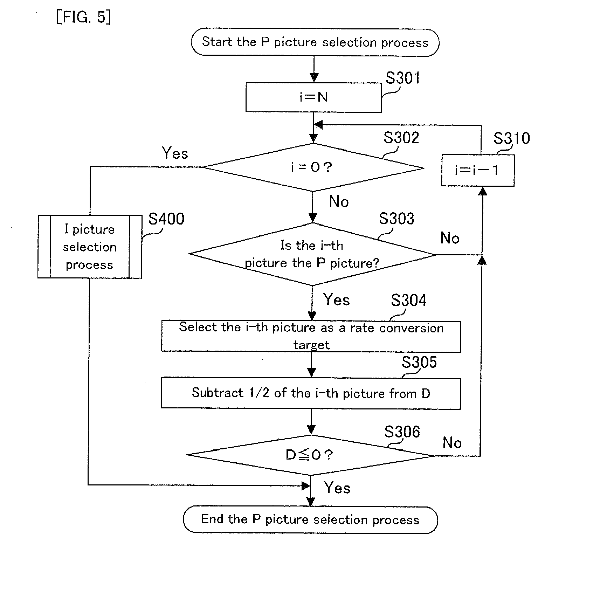

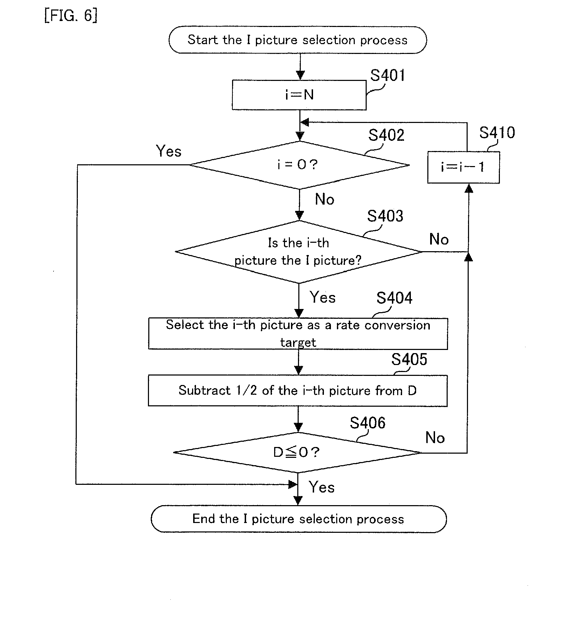

Next, with reference to FIG. 1, and FIG. 4 to FIG. 6, the picture selection process in the first embodiment of the present invention will be explained. FIG. 4 is a flowchart showing the operation of the picture selection process in the first embodiment. FIG. 5 is a flowchart showing the operation of a P picture selection process in the first embodiment. FIG. 6 is a flowchart showing the operation of an I picture selection process in the first embodiment.

As shown in FIG. 4, if the picture selection process is started by the picture selection device 160, firstly, the number N of the picture in the GOP stored in the picture structure information memory device 130 is substituted to a variable i (step S201).

Then, a data size D to be deleted is calculated on the basis of a desired rate conversion factor P and the GOP size B (step S202). The desired rate conversion factor P is a GOP-unit rate conversion factor, and it is set by the setting device 140 in accordance with an input operation by a user. The GOP size B is obtained by referring to the picture structure information memory device 130. The data size D to be deleted is calculated by a relational expression D = (1-P/100) X B.

Then, it is judged whether the value of the variable i is 0 (step S203). If the value of the variable i is 0 (the step S203: Yes), the P picture selection process described later is performed (step S300). If the value of the variable i is not 0 (the step S203: No), it is judged whether the picture type of the 1-th picture from the head of the pictures included in the GOP is a B picture (step S204). If the type of the i-th picture is not the B picture (the step S204: No), the value of the variable i is decremented by 1, i.e., i=i-1 (step S210), and the aforementioned operation is repeated (the step S203, the step S204). If the type of the i-th picture is the B picture (the step S204: Yes), the i-th picture is selected as the one to be rate-converted on the fixed rate converter 150, and it is temporarily stored (step S205).

Then, the picture size of the i-th picture after the i-th picture is rate-converted on the fixed rate converter 150, i.e. 1/2 of the data size of the i-th picture, is subtracted from the data size D to be deleted (step S206).

Then, it is judged whether the data size D to be deleted is equal to or less than 0 (step S207). That is, it is judged whether the desired rate conversion factor P is realized by rate-converting the selected picture. If the data size D to be deleted is not equal to or less than 0 (the step S207: No), the value of the variable i is decremented by 1, i.e., i=i-1, in order to further select another picture (the step S210), and the aforementioned operation is repeated. If the data size D to be deleted is equal to or less than 0 (the step S207: Yes), the desired rate conversion factor P is realized by rate-converting the selected picture, so that the picture selection process is ended.

Next, with reference to FIG. 5, the P picture selection process will be explained.

As shown in FIG. 5, if the P picture selection process is started by the picture selection device 160, firstly, the number N of the picture in the GOP stored in the picture structure information memory device 130 is substituted to a variable i (step S301).

Then, it is judged whether the value of the variable i is 0 (step S302). If the value of the variable i is 0 (the step S203: Yes), the I picture selection process described later is performed (step S400). If the value of the variable i is not 0 (the step S302: No), it is judged whether the picture type of the i-th picture from the head of the pictures included in the GOP is a P picture (step S303). If the type of the i-th picture is not the P picture (the step S303: No), the value of the variable i is decremented by 1, i.e., i=i-1 (step S310), and the aforementioned operation is repeated (the step S302, the step S303). If the type of the i-th picture is the P picture (the step S303: Yes), the i-th picture is selected as the one to be rate-converted on the fixed rate converter 150, and it is temporarily stored (step S305).

Then, the picture size of the i-th picture after the i-th picture is rate-converted on the fixed rate converter 150, i.e. 1/2 of the data size of the i-th picture, is subtracted from the data size D to be deleted (step S304).

Then, it is judged whether the data size D to be deleted is equal to or less than 0 (step S306). That is, it is judged whether the desired rate conversion factor P is realized by rate-converting the selected picture. If the data size D to be deleted is not equal to or less than 0 (the step S306: No), the value of the variable i is decremented by 1, i.e., i=i-1, in order to further select another picture (the step S310), and the aforementioned operation is repeated. If the data size D to be deleted is equal to or less than 0 (the step S306: Yes), the desired rate conversion factor P is realized by rate-converting the selected picture, so that the P picture selection process is ended.

Next, with reference to FIG. 6, the I picture selection process will be explained.

As shown in FIG. 6, if the I picture selection process is started by the picture selection device 160, firstly, the number N of the picture in the GOP stored in the picture structure information memory device 130 is substituted to a variable i (step S401).

Then, it is judged whether the value of the variable i is 0 (step S402). If the value of the variable i is 0 (the step S402: Yes), it is considered that all the pictures are judged to be selected, and the I picture selection process described is ended. If the value of the variable i is not 0 (the step S402: No), it is judged whether the picture type of the i-th picture from the head of the pictures included in the GOP is an I picture (step S403). If the type of the i-th picture is not the I picture (the step S403: No), the value of the variable i is decremented by 1, i.e., i=i-1 (step S410), and the aforementioned operation is repeated (the step S402, the step S403). If the type of the i-th picture is the I picture (the step S403: Yes), the i-th picture is selected as the one to be rate-converted on the fixed rate converter 150, and it is temporarily stored (step S404).

Then, the picture size of the i-th picture after the i-th picture is rate-converted on the fixed rate converter 150, i.e. 1/2 of the data size of the i-th picture, is subtracted from the data size D to be deleted (step S405).

Then, it is judged whether the data size D to be deleted is equal to or less than 0 (step S406). That is, it is judged whether the desired rate conversion factor P is realized by rate-converting the selected picture. If the data size D to be deleted is not equal to or less than 0 (the step S406: No), the value of the variable i is decremented by 1, i.e., i=i-1, in order to further select another picture (the step S410), and the aforementioned operation is repeated. If the data size D to be deleted is equal to or less than 0 (the step S406: Yes), the desired rate conversion factor P is realized by rate-converting the selected picture, so that the I picture selection process is ended.

As explained above, in the picture selection process (the step S200), the picture type is prioritized and selected by the picture selection device 160 in the order of the B picture, the P picture, and the I picture. That is, the B picture is firstly selected as the picture to be rate-converted. If the desired rate conversion factor P cannot be realized even if all the B pictures are selected, the P picture is selected by the P picture selection process (the step S300). Then, further, as long as the desired rate conversion factor P cannot be realized even if all the P pictures are selected, the I picture is selected by the I picture selection process (the step S400). That is, it is constructed to select the I picture, which significantly influences image quality in case of the rate conversion, as little as possible. Thus, it is possible to reduce the deterioration of the image quality after the rate conversion.

Moreover, in the first embodiment, in addition to the picture type, the picture size is also stored in the picture structure information memory device 130. Thus, in the picture selection process, the selection may be performed by the picture selection device 160, in accordance with the picture size in addition to the picture type. By virtue of such construction, it is also possible to select the picture to be rate-converted, by additionally considering the recordable data capacity of the recording medium 170 on which the outputted video data is recorded. For example, if the recordable data capacity is relatively large, the picture type of the picture to be rate-converted may be relatively reduced, and if the recordable data capacity is relatively small, the picture type of the picture to be rate-converted may be relatively increased.

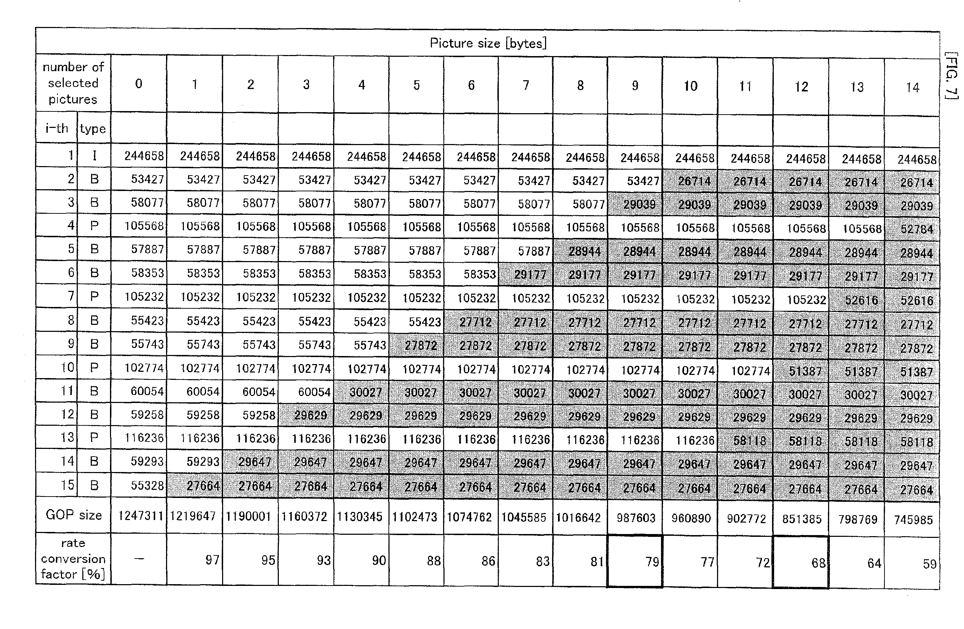

Next, with reference to FIG. 7, the picture selection process will be further explained. FIG. 7 is a table showing one example of the picture selection process in the first embodiment.

FIG. 7 shows a transition in the picture to be rate-converted, selected by the picture selection processes shown in FIG. 4 to FIG. 6, with regard to the GOP whose number N of the pictures in the GOP is 15, as one example of the unit data group.

On the table in FIG. 7, the numerical value shown in the column of "i-th" indicates that it is the i-th picture from the head. The alphabets "B", "P", and "I" shown in the column of "type" indicate the picture type, and each indicates "B picture", "P picture", and "I picture". For example, it indicates that the picture type of the second picture from the head is the B picture.

The numerical value shown in the row of "number of selected pictures" indicates the number of pictures selected by the picture selection process. For example, the numerical value "0'' shown in the row of "number of selected pictures" indicates that the number of pictures selected by the picture selection process is 0; namely, it indicates before the rate conversion.

The numerical value shown in the row corresponding to the i-th picture indicates the picture size of the i-th picture when the picture is selected by the "number of selected pictures". For example, it indicates that the picture size of the 15-th picture is 27,664 bytes when the number of selected pictures is 1. Incidentally, on the table in FIG. 7, a colored section indicates the picture size of the selected picture.

The numerical value shown in the row of "GOP size" indicates the GOP size when the picture is selected by the "number of selected pictures", i.e. when the picture to be rate-converted is rate-converted by the "number of selected pictures".

The numerical value shown in the row of "rate conversion factor" indicates the GOP-unit rate conversion factor P which is realized when the picture to be rate-converted is rate-converted by the "number of selected numbers".

In FIG. 4 and FIG. 7, if the picture selection process is started by the picture selection device 160, firstly, the number N (i.e. 15) of the pictures in the GOP stored in the picture structure information memory device 130 is substituted to the variable i (the step S201).

Then, the data size D to be deleted is calculated on the basis of the desired rate conversion factor P (e.g. set to be 80%) and the GOP size B (i.e. 1,247,311 bytes) (the step S202). That is, the data size D to be deleted is calculated to be D=0.2 X 1,247,311 bytes.

Then, it is judged whether the picture type of the 15-th picture from the head is the B picture (the step S204). As shown in FIG. 7, since the picture type of the 15-th picture is the B picture, this is selected as the picture to be rate-converted (the step S205).

Then, it is judged whether the desired rate conversion factor P (i.e. 80%) is realized by rate-converting the 15-th picture (the step S207). That is, it is judged whether the value obtained by subtracting the picture size of 27,664 bytes of the 15-th picture after the rate conversion from the data size D to be deleted is equal to or less than 0 (the step S207). Since the value is not equal to or less than 0 (the the step S207: No), the aforementioned operation is repeatedly performed on the 14-th picture, the 13-th picture, and so on, in this order, in order to further select another picture. The operation is performed in order in this manner, and the desired rate conversion factor P of 80% is realized when the number of selected pictures is 9 whose rate conversion factor P realized is 79% as shown in FIG. 7. At this time, what are selected as the picture to be rate-converted are the 15-th, 14-th, 12-th, 11-th, 9-th, 8-th, 6-th, 5-th, and 3-rd pictures, and the picture type of all the pictures is the B picture.

In the case that the desired rate conversion factor P is 70%, even if all the pictures whose picture type is the B picture are selected, i.e. even if the number of selected pictures is 10, the desired rate conversion factor P of 70% cannot be realized as the realized rate conversion P is 77%. In this case, the picture whose picture type is the P picture is also selected. That is, the P picture selection process shown in FIG. 5 is also performed. The desired rate conversion factor P of 70% can be realized when the number of selected pictures is 12 whose rate conversion factor P realized is 68% as shown in FIG. 7. At this time, what are selected as the picture to be rate-converted are all the pictures whose picture type is the B picture (i.e. the 15-th, 14-th, 12-th, 11-th, 9-th, 8-th, 6-th, 5-th, 3-rd, and 2-nd pictures), and the 13-th and 10-th pictures whose picture type is the P picture.

In particular, in either case of the rate conversion factors P of 80% and 70%, the I picture, which significantly influences the image quality, is not selected. Thus, it is possible to reduce the deterioration of the image quality after the rate conversion.

Incidentally, as can be seen from the table in FIG. 7, as the method of changing the rate conversion factor of the picture in order to obtain the desired rate conversion factor P, a plurality of combinations can be considered with regard to which picture type is rate-converted; however, any combination can be employed. However, it is useful that the I picture is not set as a rate-conversion target, in order to reduce the deterioration of the image quality, as described above. Moreover, with regard to the conversion factor on the fixed rate converter 150, 1/2 is useful in terms of simplification of the structure; however, a fixed rate converter having another conversion factor, such as 1/3, 1/4, and 2/3, can be also employed.

The present invention is not limited to the aforementioned embodiment, and various changes may be made without departing from the essence or spirit of the invention which can be read from the claims and the entire specification. A rate converter, which involves such changes, is also intended to be within the technical scope of the present invention.

As explained above in details, according to the rate converter in the first embodiment, it is provided with: the picture structure judgment device 1.20 for judging the picture structure; the fixed rate converter 150 for performing the rate conversion at a fixed rate conversion factor; and the picture selection device 160 for selecting the picture to be rate-converted by the fixed rate converter 150, in accordance with at least the picture type of the picture structure. Thus, it is possible to rate-convert the video data in a relatively simple structure, and such a structure is relatively inexpensive, so that it is extremely useful in practice.

### Industrial Applicability

The rate converter according to the present invention can be applied to a rate converter which rate-converts the video data, for example.

## Claims

1. A rate converter comprising:
a picture structure judging device for judging a picture structure including at least a picture type, the picture structure being related to a plurality of pictures, the plurality of pictures being included in a unit data group of inputted video data, each of the plurality of pictures being classified into any one of a plurality of picture types set in advance;
a rate converting device for selectively rate-converting a bit rate of the picture at a predetermined rate conversion factor; and
a picture selecting device for selecting the picture to be rate-converted by said rate converting device, from among the plurality of pictures, in accordance with at least the picture type of the picture structure judged by said picture structure judging device.

2. The rate converter according to claim 1, wherein said picture selecting device selects the picture to be rate-converted, in accordance with a desired rate conversion factor, which is related to the video data to be outputted with respect to the inputted video data, in addition to the picture type.

3. The rate converter according to claim 2, further comprising a setting device for setting the desired rate conversion factor.

4. The rate converter according to claim 1, wherein
said picture structure judging device judges the picture structure including at least a picture size in addition to the picture type, the picture structure being related to the plurality of pictures, and
said picture selecting device selects the picture to be rate-converted, in accordance with the picture size in addition to the picture type.

5. The rate converter according to claim 1, further comprising a picture structure information memory device for temporarily storing picture structure information which indicates the judged picture structure with regard to at least one unit data group,
said picture selecting device selecting the picture to be rate-converted, on the basis of the picture structure information temporarily stored in said picture structure information memory device.

6. The rate converter according to claim 1, wherein said picture selecting device comprises:
a route selector switch which can change a supply route of supplying the inputted video data between a first route for supplying the data to said rate converting device and a second route for bypassing said rate converting device; and
a selector controlling device for selectively changing the route selector switch in accordance with at least the picture type.

7. The rate converter according to claim 1, wherein said picture selecting device prioritizes and selects the picture whose picture type is a B picture, the picture whose picture type is a P picture, and the picture whose picture type is an I picture, in this order, as the picture to be rate-converted.
